# EUROPEAN PATENT APPLICATION

(11) **EP 3 299 443 A1**
(43) Date of publication of application: **28.03.2018**
(21) Application number: 16796364.4
(22) Date of filing: 11.05.2016
(51) Int. Cl.: C10M 133/54, C10M 129/40, C10N 30/04, C10N 30/06, C10N 40/04, C10N 40/08, C10N 40/25, C10N 50/10

(54) **ADDITIVE FOR LUBRICATING OIL, AND LUBRICATING OIL COMPOSITION**

(30) Priority: 16.05.2015 JP 2015100604
(71) Applicant: Turbulence Ltd., Tokyo 166-0013 (JP)
(72) Inventor: SUGIMOTO Shigeru, Tokyo 166-0013 (JP)
(74) Representative: Müller-Boré & Partner Patentanwälte PartG mbB
(86) International application number: PCT/JP2016/064020
(87) International publication number: WO 2016/185971

(57) **Abstract**

[Problem] To provide a novel lubricating oil which meets a revealed demand for a novel ashless lubricating oil which does not contain phosphorus, sulfur, or metals and which can have a high friction reducing effect, inhibits the occurrence of deposits, sludge, and the like, and exhibits a cleansing effect. The present invention also addresses the problem of providing a novel lubricating oil capable of exhibiting excellent performance even in various environments, such as a low-temperature environment and a high-temperature environment, even when the amount of the lubricant oil added is increased, on the basis of a finding that there is a demand for exhibition of performance such as a friction reducing effect, a cleansing effect, and the like even in various environments, such as a low-temperature environment and a high-temperature environment. [Solution] This additive for lubricating oil and grease is characterized by containing a polyetheramine carboxylic acid salt represented by general formula (1), [R₁-COO-][R₂-O(AO)ₘ-XH⁺] (1), wherein the carboxylic acid is a carboxylic acid having a carbon number R₁ of 7-21, preferably is a carboxylic acid having a carbon number R₁ of 7-19, and more preferably is oleic acid that is C17, R₂ is a hydrocarbon group having a carbon number of 8-50, A is an alkyl group having a carbon number of 2-6, O is oxygen, m is an integer of 10-50, and X is an amino group or a substituted amino group.

## Description

### TECHNICAL FIELD

This invention relates to the additive for lubricant and lubricant composition. Especially it relates to the additive which is used as a lubricant for the internal combustion engine, a drive system lubricant or a hydraulic oil and grease and has both friction reduction performance and detergent performance is an ashless type which does not contain elements and metals such as sulfur and phosphorus and lubricant compositions with this additive. The invention has multiple performances. First, it reduces friction which will lead to energy save, lubricity improvement and operation sound reduction effect. Second and third performance are the generation suppression capability and the ability to clean the deposit sludge of the entire mechanical system. The detergent capability can inhibit and remove property such as varnish that adhere and are produced to the metallic surface.

### BACKGROUND ART

Recently, the friction reduction performance is a critical factor for lubricating oil used for all mechanical parts, because it leads to energy save, lubricity improvement, noise reduction and smooth movement etc. The improvement of the friction reduction performance will become a high-profile issue in the future and many new chemical substances, compounds and formulations that relate to this issue are being invented.

For example, organic molybdenum compounds such as Molybdenum dithiocarbamate are used worldwide. (For instance, refer to patent literature 1)

Organic molybdenum compound is very effective, but while at the same time, it is assumed that the durability is a problem. Moreover, because organic molybdenum compound contains sulfur and phosphorus, etc., basically thermal stability is poor and this becomes the cause to generate sludge. Furthermore, because organic molybdenum compound contains sulfur and phosphorus, it deteriorates the performance of the exhaust emission control device etc., when decomposing and combustion occurs. Also, because organic molybdenum compound contains metals and others, the problem is encountered on the exhaust gas recycling device mounted on the latest high powered downsizing concept engine with smaller displacement, and the supercharger etc., such as solidification of deposits.

In addition, in order to meet various demands of every kind of Lubricant, it deteriorates the original cleaning performance of the Lubricant. And so, in order to improve the detergent performance, technologies to maintain the detergent performance by various detergents and various formula are introduced (for example, refer to patent document Number 2).

As seen from above, organic molybdenum compounds contain phosphorus, sulfur and heavy metal and that is why it has environmental disadvantages. The phosphorus content upper limit of the API standard which is the general standard of engine oil is as indicated below. In fact, the amount that can be used in the future is going to more strictly limited.
SG: No restriction
SH/GF-1 :0 12%
SH/GF-2
SL/GF-3 : 0.10%
SM/GF-4
SN/GF-5 : 0.08-006% (0.06% is the lower limit)

Moreover, for example, it is known that in some genuine oil and factory filling oil, use of organic molybdenum compound has been refrained and switched to other friction modifier formulation. That is, type of friction modifier has been gradually shifting to such as esters, fatty acids, amines, amides, salts with organic acids and the aliphatic amines recently.

As well as the energy saving effect, there is a basic performance which is very important for the lubrication of a machine. i.e. Each mechanical parts must move smoothly. However, when varnish deposit and such are created to the surface of the metal, the movement becomes less smooth. Also, a self-sustained oscillation occurs, which generates chattering sound and vibration. For instance, in a case of constant velocity joint CVJ and such, to prevent self-sustained vibration and to increase the antiwear performance, many formulations are introduced. (For example, refer to patent document 3) Many of the molybdenum compounds used for such grease are PRTR (Pollutant release and transfer register) restricted substances. Therefore, the reduction of molybdenum compound usage is desired also from the environment point of view, and the usage itself is put in question.

In addition, in the case of hydraulic oil and cylinder oil and such, it is important that these oils do not just reduce friction of the pump but also increases the performance to energy-saving by less friction and makes the movement of the cylinder smooth. Many technologies are introduced. (For example, refer to patent document 4)

### CITATION LIST

### Patent Documents

Patent document 1: JP, 2006-348223, A
Patent document 2: JP, H09-130565, A
Patent document 3: JP,2010-090243, A
Patent document 4: JP,5426829, B

### SUMMERY OF THE INVENTION

### Problems to be solved by the Invention

In various mechanical parts, a variety of lubricants are used, and more effect to lower the friction is desired strongly in recent years. The use of organic molybdenum compounds (molybdenum dithiocarbamate, molybdenum dithiophosphate, and such) are preferred as this measure at this moment.

However, as written above, organic molybdenum compound has good effect to lower friction, but environmental issue (PRTR), and also cases have been beginning to stand out which has a negative aspect when evaluated as a total system. Therefore, what is required is an organic compound additive technology which is environment - friendly, and does not contain metal, moreover phosphorus and sulfur.

### <Engine Oil>

In the engine field, down-sizing is a trend in both gasoline engine and diesel engine. In both gasoline engine and diesel engine, an efficient than ever supercharger and exhaust gas circulation device is in demand. These devices are essential. The devices send a large amount of exhaust gas to the intake side and lower the combustion temperature, which decreases NOx exhaust. Even in high compression engine, knocking and such does not occur and the efficiency of the engine itself is increased.

In the exhaust gas circulation device, EGR cooler and EGR control valve and such are incorporated to the system. The EGR air cooler lowers the circulating exhaust gas temperature, and the EGR valve controls the volume of the gas. However, a part of the engine oil which has evaporated and burnt flows in to the EGR system with the exhaust gas. In this case of existing engine oil, a deposit is generated in the EGR cooler, and the cooling effect worsens, and inaccurate control occurs such as the EGR valve does not close completely and such. Especially, when the EGR valve does not close completely, it will lead to output reduction. In addition, if the situation gets worse, the cross-section area of the EGR pipe arrangement just before the suction side duct becomes narrow, and exhaust gas will not flow to each cylinder evenly, and that will cause engine malfunction problems. These problems are mainly caused by additives that contain sulfur, phosphorus, metal, and especially friction modifier formulation.

In existing engine oil, as for the friction reduction effect itself, it is hardly to say that the durability is enough. Therefore, there is a demand for the engine oil to maintain its performance during the entire life of the engine oil. In the latest API-SN/RC, standardization of the amount of evaporating rate, total phosphorus and fuel economy performance has becoming to start. However, among these engine oils meat this standard which has effect to reduce friction, it does not harm the catalyst and such, but it generates sludge easily and such. It is not always suitable for the above mentioned EGR system. It causes the combustion chamber deposit at the same time.

### <Hydraulic Oil>

For instance, in a common hydraulic oil such as the lubricants for the hydraulic cylinder oil, only the lubricating performance of the metal on metal is forecasted, and because of the frictional resistance inside the hydraulic cylinder, the initial movement is often not smooth. In other words, when the cylinder starts to move, internal friction and such occurs, and extra pressure is needed. i.e. additional energy is required. Therefore, a better friction reduction performance and lubricating performance are required. In addition, as for the hydraulic pump, because the operation friction is large, not only is the energy loss big but the operating oil itself produces heat, and oil temperature rises, then oil film decreases, then lubricity becomes insufficient.

In addition, as for the hydraulic oil, many have detergent-dispersant added, in order to prevent produce of sludge which causes lack of lubrication and such and varnish produce. However, this only prevents the generation of varnish and such, but the detergency is not enough. That is, because the detergency is not enough, in order to remove the varnish and such once generated on the surface of the metal, disassembling and cleaning and such is required.

As mentioned above, as for the hydraulic oil, a formulation which has enough friction reduction performance and detergency, and also has sludge prevention effect is required. However, additives and formulations for hydraulic oil that can demonstrate enough performance have not yet been produced.

### <Gear Oil>

As for the gear oil, energy saving performance is required. The measure which is most common is to decrease the viscosity which leads to prevent stirring resistance which occurs when the gear stirs lubricant oil formula together with secure lubricity. However, decreasing of viscosity in high-load, oil temperature rises and oil film becomes less, which leads to gear mesh noise and in the worst case lack of lubrication. In addition, as for the worm gear and such, higher friction reduction effect is required, so more molybdenum compound is tended to be used. However, from the environment aspect, of course, formula which does not contain phosphorus, sulfur and heavy metal is required.

### <Grease>

There are many performance requirements for grease. Among those, as for the Constant Velocity Joint (CVJ) which is used for cars, high surface pressure generates in the CVJ part where it is lubricated, and unusual vibration is often generated caused by rolling and slipping movement of the CVJ part. In order to solve this problem, a molybdenum compound, phosphorus/sulfur inclusions and over based sulfonate and such tend to be used. And, to improve friction characteristic, formulation containing oils and fats are emerged. (For instance, refer to patent document 4).

However, it is hard to say that enough friction reduction effect can be obtained from the conventional grease, and it is difficult to keep the effect to last for a long term. Especially, when mileage increase, sludge and such generates on the metal surface, and the problem occurs in which the friction characteristic changes.

As mentioned above, as for the conventional lubricant oil formula, friction reduction effect is required and the other hand, when friction reduction effect if enhanced, deposit, sludge and varnish is likely to generate. It is a trade-off relation.

This invention will solve the problems mentioned above. A new lubricant oil formula, which has high friction reduction effect and can prevent deposit, sludge and such, and also, has detergent effect which is ashless and does not contain any of sulfur phosphorus and metal is required. To supply such lubricant oil formula is required.

On the other hand, as for additives to enhance friction reduction effect, many of them are fatty acids, aliphatic amines, salts with fatty acids and aliphatic amines, or amide compounds. However, these have lack of cold flow property, or lack of solubility at low temperature. In addition, these tend to generate sludge and deposit at high temperature. So something with better cold flow property and low temperature solubility, and less generation of deposit and such is required. Thus, the inventor has found that a formula which has friction reduction effect and detergent performance and such in high temperature and low temperature is required. In the invention as claimed in the application concerned, the new lubricant oil formula will demonstrate superior performance even when additives dosage are increased in various situations such as high temperature or low temperature.

### Means for Solving the Problem

As a result of sincere study, considering the above-mentioned problems, we found the new additive and the lubricant oil formula composition containing the salt with organic acid and the amine with the polyether binding.

That is to say, the feature is, that the lubricant additive contains Polyetheramine carboxylic acid salt represented by general formula (1).

[R₁-COO⁻][R₂-O(AO)ₘ-XH⁺] (1)

The above-mentioned carboxylic acid, is carboxylic acid of a carbon number of R₁=7 to 21, a carbon number of R₁=7 to 19 is preferred, and, highly preferred is an oleic acid of C17.

Carboxylic acid R₁ is a hydrocarbon residue of a carbon number of 7 to 21, and it does not matter whether it is a single material or a mixture.

Moreover, the polyetheramine moiety base is a compound represented by R₂-O(AO) m-X. R₂ is a hydrocarbon residue of a carbon number of 8 to 50, and A is an alkylene group of a carbon number of 2 to 6, O is oxygen, m is an integer in a range of 10 to 50, and X is a hydrocarbon with an amino group or a substituted amino group.

It doses not the matter whether A is either a single alkylene group or a mixture of 2 or more alkylene groups. X is (C₃H₆NH) nH, and it is desirable for n to be the integer from 1 to 3.

Further, the Polyether may have any molecule weight distribution. Furthermore, the structures of R2 and X may constitute a salt in which polyetheramines having different structures are mixed

As for the structure of the polyetheramine, A of (AO) is an alkylene group of a carbon number of 2 to 4, a carbon number of 3 to 4 is preferred, and the highly preferred carbon number is 4.

In addition, by using oxyalkylene compound presented by general formula

R₃-N(BO)aH(BO)bH (2)

(in the formula, R₃ is an alkyl group or an alkenyl group of a carbon number of 6 to 24. a and b are the average degree of polymerization, and a+b is 2-10. B is an alkylene group of a carbon number of 2 to 4) and the substance of formula (1) together, the polyetheramine carboxylic acid salt has less influence from other additives, and not only the storage stability improves, but there is a benefit of friction reduction and detergent effect.

As for the alkyl group or the alkenyl group of carbon number from 6 to 24 shown by R₃ are, straight alkyl or branched alkyl, for example, hexyl group, the heptyl group, the octyl, the nonyl group, the decyl group, the dodecyl group, tridecyl group, tetradecyl group, hexadecyl group, octadecyl group, eicosyl group, and docosyl group. Example of alkenyl group is myristole group, palmitoleyl group, oleyl group and linoleyl group. Among these, aliphatic hydrocarbon group of carbon number 8-20 is preferred, and decyl group, dodecyl group, tetradecyl group, hexadecyl group, octadecyl group and oleyl group are highly preferred. As well, if the carbon number of R₃ is 5 or less, 25 or more, the effect of increasing the friction reduction and the detergency is not achieved.

As for the alkylene group of hydrocarbon from 2 to 4 shown by B is the ethylene group, propylene group, butylene group, and the combined use of 2 or more. For example, the combined use of ethylene group and butylene group. Among the combinations, the ethylene group is most preferred.

Moreover, each of a and b is the integers of one or more, a+b=2 to 10, 2 to 4 is preferred, and the most preferable is when each is 1. When a+b is less than 2, and larger than 10, the effect of increasing the friction reduction and the detergency is not achieved.

As well, in formula (2), the additives do not have to be a single item. It may be a mixture which meets the above-mentioned requirements.

As for a concrete example of Oxyalkylene alkyl amine shown in general formula (2), N, N-hydroxyethyllaurylamine, N, N-di-hydroxy-ethoxyethyl-laurylamine, N, N-di-hydroxy-ethoxyethyl-myristylamine, N, N-di-hydroxyethyl-stearylamine and N, N- dihydroxyethyl-oleylamine are included.

In the additive of the present invention, Polyetheramine carboxylic acid salt represented by formula (1) can be used by itself or used combined with Polyoxyalkylene alkyl amine formula (2), according to the purpose of use. According to each lubricant, the ratio and type can be arbitrarily chosen.

The addition amount of the polyoxyalkylene alkylamine is 0.5 to 99.9 w/w%, more preferably 1 to 75 w/w%, still more preferably 5 to 50 w/w% with respect to the polyetheramine carboxylic acid salt.

In addition, it may be diluted with oil and others according to the lubricant in use and the purpose of use. As for the oil to be used for dilution, it may be a mineral oil, a synthetic oil such as PAO or an ester, or a mixture thereof.

The range of use of the additives in the present invention is all kinds of lubricant, and the dosage thereof is 0.01 to 50 w/w%, more preferably 0.05 to 10.0 w/w%, and still more preferably 0.5 to 10.0 w/w%.

This additive in the present invention can be used with detergents, dispersants, antiwear agents, antioxidants, oiliness agents, friction modifiers, antirust viscosity index improver, thickeners etc. which is used for various lubricants and there is no restriction on the types and combinations thereof.

### Effects of the Invention

### <Comparison with Fatty Acid Alone>

The above polyetheramine carboxylic acid salt has an effect of lowering friction in any formulation of lubricants compared with, for example, a fatty acid not being salt. Furthermore, most of the carboxylic acid alone solidifies at low temperature (around 5 °C.), but the polyetheramine carboxylic acid salt does not solidify even at -20 °C. and maintains fluidity. Therefore, high friction reduction effect can be obtained even in a low temperature lubricant. It is to be noted that the oleic acid among the above-mentioned fatty acid salts (polyetheramine carboxylic acid salt) has the greatest effect of friction reduction.

### <Comparison with Polyetheramine Alone>

In addition, as compared with polyether amine alone, the polyetheramine carboxylic acid salt, particularly polyetheramine fatty acid salt, is not only capable of maintaining the same detergency as that of polyether amine alone but also friction can be reduced by adhering to the metal surface. Here, when the conventional friction modifier gradually deteriorates, sludge, deposit, varnish or the like is generated. However, in case of polyetheramine carboxylic acid salt, there is little those adhesion, even if friction reduced. That is, the polyetheramine carboxylic acid salt has a characteristic of exhibiting friction reducing performance and detergency which could not be considered with conventional friction modifier.

Also, this friction reduction effect is not greatly affected even if combined with other friction modifiers such as amines, esters, amides, molybdenum disulfide (including organic molybdenum and the like), fatty acids, aliphatic amine salts of fatty acids, etc., It has the characteristic of stably production of the effect of the friction reduction.

### <Application to Engine Oil for Internal Combustion Engines>

For example, fuel economy begins to improve by adding 0.1 w/w% or more of polyetheramine carboxylic acid salt of the present invention to engine oil. This effect can be sustained for a long time. In addition, even if the engine oil is exchanged to those containing no polyetheramine carboxylic acid salt, a part of the effect will be maintained. That is, with conventional friction modifiers, friction reduction effect is not recognized when exchanged to oil without friction modifier. In this way, compared with the conventional formulation, the present invention exhibits a heterogeneous effect, and its effect has reached a different high level from the conventional level.

Moreover, inside the engine, the deposit of not only the part immersed in the engine oil but also the combustion chamber and the circumferential part above the piston ring is greatly reduced. Conventionally, there was a problem of deposit caused by the engine oil fine mist, or its vapor that caused engine troubles. Various problems were occurring. For example, the problem of combustion chamber deposit/inlet valve deposit (caused by engine oil fine mist/vaporization through the pipe connected to inlet duct from crankcase. This pipe is to prevent seals damage due to rise in internal engine pressure), a problem of clogging of the EGR piping, a problem that the EGR valve does not completely close. By adding polyetheramine carboxylic acid salt to an engine oil formulation in an amount of 0.5 w/w% or more, more preferably 0.5 to 20 w/w%, the effect of preventing the deposit and solidification of the deposit is produced.

After all, by adding polyetheramine carboxylic acid salt of 0.5 w/w% or more to the engine oil, deposits in the combustion chamber as well as inside the engine are reduced. Furthermore, in the EGR system, when the conventional engine oil does not contain the polyetheramine carboxylic acid salt, a problem such as adhesion and solidification of a carbon-like deposit around the EGR valve occurs. However, according to the present invention, even if a deposit adheres, it does not solidify and does not affect the control of the valve. Thus, the effect of preventing the occurrence of troubles due to deposits caused by engine oil in the entire engine system is produced.

### <Application to Grease>

If polyetheramine carboxylic acid salt is added in an amount of 0.5 w/w% or more, preferably 1 to 30 w/w% to the formulation of grease, the friction greatly decreases. Especially in CVJ etc. where problems such as self-sustained oscillation and the like had been a problem, this occurrence can be suppressed. In the present invention, not only reduction of friction but also occurrence of discoloring substances at the metal surface (varnish etc.) can be suppressed and the effect of removing the discoloring substances at the same time is also obtained.

### <Application to Hydraulic Oil>

By adding 0.05 w/w% or more, preferably 0.05 to 10% w/w of polyetheramine carboxylic acid salt to the hydraulic fluid, the friction of the portion lubricated by hydraulic oil is greatly lowered. As a result, the efficiency improvement of the screw compressor etc. can be expected. With a hydraulic cylinder or the like, the movement of the cylinder becomes smoother and the effect such as shock reduction of the start movement and such is produced. In addition, the generation of sludge, varnish and the like on the metal surface is suppressed, and also the removal effect is demonstrated.

### <Combined Use with Polyoxyalkylene Alkylamine>

In case of the lubricants containing a strongly basic additive, or its formulation using basic metals (overbased sulfonate phenate), for example, when polyetheramine carboxylic acid is added to all engine oils, or grease / gear oil, etc., metallic salt and the like may be generated in some cases. Then, there are cases of getting cloudy, or friction reduction effect and detergency are deteriorated. In such a case, by adding an amine with a polyether structure in its molecule, for example, polyoxyalkylamine and such, to the above polyetheramine carboxylic acid salt, further effect of detergency and the friction reduction was discovered.

That is, the polyetheramine carboxylic acid salt is characterized by containing; A polyoxyalkylene alkylamine represented by the general formula (2).

R₃-N(BO)aH(BO)bH (2)

Among the above-mentioned polyoxyalkylene alkylamines, polyoxyethylene lauryl amine, in particular, has a higher detergent effect.

Those containing the above polyetheramine carboxylate and polyoxyalkylene alkylamine are particularly suitable for use in lubricating oils containing overbased metal sulfonate/phenate, and shows superior detergency and dispersancy e than conventional detergency. At the same time, the friction reduction exerts a more sustained effect as compared with the polyetheramine carboxylic acid salt used alone.

The dosage of the polyoxyalkylene alkylamine is 0.5 to 99.9 w/w%, more preferably 1 to 75 w/w%, still more preferably 5 to 50 w/w% into the polyetheramine carboxylic acid salt.

### <Defect When Polyoxyalkylene Alkyl amine Alone is Added>

Even when only the polyoxyalkylene alkyl amine (for example, polyoxyethylene alkyl amine) alone is added, considerable detergency and sludge solubility with dispersancy are obtained. For example, when polyoxyethylene alkylamine (polyoxyalkylene alkylamine) alone is added to a commercially available engine oil, it is conspicuous to decompose and dissolve the carbon sludge generated in the cam cover etc. of the engine oil. However, when added to conventional engine oil, it was confirmed that the engine oil gelled, the oil could not circulate, and the engine seizure was occurred at the worst case. On the contrary, it was found that when used together with a polyetheramine carboxylic acid salt, this gelation can be prevented and the detergency can be greatly improved.

After confirming the above performance, it was confirmed by using it for hydraulic oil / gear oil etc. not containing overbased metal sulfonate / phenate, that a formulation by adding polyoxyalkylene alkylamine to polyetheramine carboxylic acid salt, high detergency/dispersancy ▪ friction reduction effect was confirmed compared to polyetheramine carboxylic acid salt alone.

As is apparent from the above, according to the combination of the polyetheramine carboxylic acid salt and the polyoxyalkylene alkylamine (for example, polyoxyethylene alkylamine), regardless of the presence or absence of the basic metal overbased sulfonate, higher detergency and dispersancy was demonstrated.

It is possible to add detergents (regardless of type and molecular structure) to the above-mentioned additives or lubricating oil composition. And also it does not restrict the combination with other additives usable for lubricating oils such as amines, amides, esters, fatty acids, furthermore rust preventives, dispersants, solubilizing agents, etc.

### BRIEF DESCRIPTION OF THE DRAWINGS

[FIG. 1] FIG. 1 is a figure showing a configuration of a screw jack used for evaluating friction characteristics of grease (Example 5).
[FIG. 2] FIG. 2 is a figure showing a configuration of a relief valve used for evaluating sludge generation (Example 7).

### EMBODIMENTS OF THE INVENTION

In the following, preferred embodiments of the present invention will be described with reference to examples.

All of the following examples were carried out mainly by combining polyetheramine carboxylic acid salt and polyoxyethylene alkylamine which are highly effective combined.

Even when the molecular structure of each combination is changed, the same performance was exhibited. Especially, regarding the polyetheramine carboxylic acid formation, it was confirmed the change of absorption of reaction by using FT-IR of JASCO, when producing salt.

While preparing all the salts, when carboxylic acid is added to the polyetheramine and stirred, the absorbance at 1720 to 1700 cm-1 from the bond of C=O peculiar to the carboxylic acid remarkably disappeared and shifted, as the salt is gradually formed. Also, the formation of polyetheramine carboxylic acid salt with surety was confirmed, we were going to annihilate and shift, and then evaluated.

### Example 1

### <Evaluation of Low Temperature Characteristics>

**<TABLE 1> Low Temperature Properties of Carboxylic Acid Simple Substance, and Polyetheramine Carboxylic Acid Salt**

| Sample No. | Sample Name | CXX | Temperature | | |
|---|---|---|---|---|---|
| | | | 20°C | 0°C | -20 |
| 1 | Caprylic acid | C7 | Liquid | Solid | Solid |
| 2 | Lauric acid | C11 | Solid | Solid | Solid |
| 3 | Palmitic acid | C15 | Solid | Solid | Solid |
| 4 | Linoleic acid | C17 | Liquid | Liquid | Solid |
| 5 | Oleic acid | C17 | Liquid | Solid | Solid |
| 6 | Behenic acid | C21 | Solid | Solid | Solid |
| 7 | PEA | | Liquid | Liquid | Liquid |
| 8 | PEA + Caprylic acid | C7 | Liquid | Liquid | Liquid |
| 9 | PEA + Lauric acid | C11 | Liquid | Liquid | Liquid |
| 10 | PEA + Palmitic acid | C15 | Liquid | Liquid | Liquid |
| 11 | PEA + Linoleic acid | C17 | Liquid | Liquid | Liquid |
| 12 | PEA + Oleic acid | C17 | Liquid | Liquid | Liquid |
| 13 | PEA + Behenic acid | C21 | Liquid | Liquid | Semi-solid |

In Table 1, "solid" includes powder crystals. Semi-solid is a state in which fluidity remains.
CXX is the carbon number excluding the carbon of the carboxylic acid group.

PEA is, R₂ = 13, A = 4, m = 20, X uses n = 1. The same result was obtained even if R₂ = 8, A = 2, X was changed to n = 2, etc. PEA behenic acid is also liquid at by -10 °C.

For PEA, those with R₂ = 13 (carbon number 13) are derived from branched tridecanol = (CH 3 CH (CH 3) ((CH 2 CH (CH 3)) 2 CH (CH 3) (CH 2) 2 OH) synthesized by the oxo method.

Note that PEA has the following structural formula.

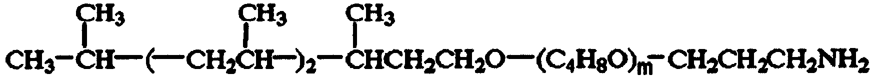

Moreover, as for the one with R2 = 8 (carbon number 8), PEA containing octanol = n-octanol (CH 3 (CH 2) 7 OH) and 2-ethylhexanol (CH 3 (CH 2) 3 CH (C 2 H 5) CH 2 OH) was used.

As is apparent from the above Table 1, while the carboxylic acid alone is a solid at ordinary temperature or low temperature, the polyetheramine carboxylic acid salt (Samples 8 to 13) is in liquid or semi-solid state even at low temperature. This and also high low temperature property was confirmed. As a result, precipitation and sediment does not occur in oil even at low temperature, and it becomes possible to use it at a high concentration.

### Example 2

### <Evaluation of Friction Reduction Effect>

### Hydraulic oil:

First, as a hydraulic fluid, add only zinc dithiophosphate (ZnDTP) to the base oil VG 32 to prepare a simple one so that the friction reduction effect is not affected by other additives. Add 2.0 w/w% each of carboxylic acid to this, and add polyether amine simple substance having the same amine value as the neutralization value of each these carboxylic acids to this and add polyetheramine carboxylic acid salt reacted with same amount of these carboxylic acids to this. And then, compared the forces when beginning to move the hydraulic cylinder.

The friction containing ZnDTP as the base is assumed to be 100, and the force required with reference to this 100 is represented by a numerical value.

**<TABLE 2> Evaluation of Friction Characteristics in Application to Hydraulic Oil**

| Sample No. | Sample Name | CXX | Cylinder Friction |
|---|---|---|---|
| 1 | Hydraulic oil (ZnDTP) | | 100 |
| 2 | Hydraulic oil + PEA | | 100 |
| 3 | Hydraulic oil + Caprylic acid | C7 | 99 |
| 4 | Hydraulic oil + PEA Caprylic Acid Salt | C7 | 97 |
| 5 | Hydraulic oil + Oleic acid | C17 | 94 |
| 6 | Hydraulic oil + PEA Oleic Acid Salt | C17 | 88 |
| 7 | Hydraulic oil + Behenic acid | C21 | 98 |
| 8 | Hydraulic oil + PEA Behenic Acid Salt | C21 | 96 |
| 9 | Hydraulic oil + GMO | | 93 |
| 10 | Hydraulic oil + GMO + PEA | | 93 |
| 11 | Hydraulic oil + PEA Oleic Acid Salt + POEAA | C17 | 87 |

In Table 2, CXX is the carbon number excluding the carbon of the carboxylic acid group.

As in Sample 10 in Table 2, the combination of 2.0 w / w% glycerol monooleate (GMO) alone, which is a general friction modifier alone, with polyether amine alone was also evaluated. Synergistic effect by combination with PEA was not observed. Whereas in samples 4, 6 and 8, it was confirmed that polyether carboxylic acid salt has friction reducing effect more than carboxylic acid alone. From this, it can be seen that the polyetheramine carboxylic acid salt itself has a friction reducing effect.

At the same time, when PEA oleic acid salt (fatty acid containing at least 80% of oleic acid) is added, as shown in Sample 6, there is higher effect of friction reduction compared to the GMO, which is said to reduce the friction the most among conventional products. The PEA used here was R₂ = 13, A = 4, m = 20, X = n = 1, and ZnDTP was LZ 1375 manufactured by Lubrizol Corporation, and base oil was the mineral oil with viscosity grade of VG 32.

Furthermore, as shown in Sample 11, when polyoxyethylene lauryl amine of 5.0 w/w% was added to the polyether amine oleic acid salt, further synergistic effect was obtained to reduce friction.

### Example 3

### <Fuel Saving Effect in Application to Engine Oil>

To prevent the influence of other additives in the engine oil, PEA, fatty acid containing 80% oleic acid, and same PEA salt with fatty acid containing 80% oleic acid were each added to the base oil (ester 100%: addition of only viscosity index improver + ZnDTP: LZ 1375 to Kao Lube 262) to measure each fuel consumption. The dosage is 1.0 w/w% of the fatty acid simple substance, PEA with the amine value same as the neutralization value thereof, and a complete salt by the two.

A PEA with R₂ = 13, A = 4, m = 20, and X = n = 1 was used.

The test vehicles, two Honda PCX, 150/125, ran a 250 km round trip to and from the same route. The average value of four tests was sought.

Measurement was carried out at an ambient temperature of 20 to 25 °C. so that there was no change in the engine oil temperature.

**<TABLE 3> Improvement of Fuel Efficiency by Engine Oil**

| Sample No. | Sample Name | Fuel Economy Improve Rate (%) |
|---|---|---|
| 1 | Engine Oil | 0% |
| 2 | Engine Oil + PEA | 0% |
| 3 | Engine Oil + Oleic Acid | 4.20% |
| 4 | Engine Oil + PEA Oleic Acid Salt | 5.80% |

As is apparent from Table 3, it was confirmed that the highest fuel efficiency improvement rate can be obtained from the use of the engine oil to which the PEA salt of Sample 4 is added. Further, it was confirmed that Sample 4 can obtain a higher fuel efficiency improvement rate than Sample 3 with oleic acid added.

### Example 4

### <Friction Reduction Effect in Application to Gear Oil>

### <TABLE 4> Drive Torque Reduction of L-type Spiral Gear

In case of gear oil, it is difficult to measure its friction characteristics from common gears, and at the same time, in order to eliminate the influence of stirring resistance and the like, L type spiral gear is used so that the slip (friction resistance) of the gear can be more easily understood. Measurement was carried out with a torque that is driven with 90% of the maximum load capacity of the allowable torque applied.

### <Test Gear Data>

Accuracy grade: JIS N 9 grade (JIS B 1702-1: 1998)
Gear reference cross section: tooth right angle
Tooth form: parallel tooth
Right angular pressure angle: 20 °
Twist angle: 45 °
Module m: 4
Allowable torque Nm: 25.1

Since the spiral gear itself causes slippage on the tooth surface, the friction characteristic becomes clearer.

**<TABLE 4> Drive Torque Reduction Effect of L-type Spiral Gear**

| Sample No. | Sample Name | Drive Torque Reduction Rate (%) |
|---|---|---|
| 1 | Gear Oil | 100% |
| 2 | Gear Oil + PEA | 100% |
| 3 | Gear Oil + Oleic Acid | 98% |
| 4 | Gear Oil + PEA Oleic Acid Salt | 96% |

Gear oil used is GL-4: number 80, and PEA used is R₂ = 13, A = 3, m = 20 and X = n = 1. As fatty acids, 1.0 w/w% of a mixture containing 80% oleic acid and 98% stearic acid in a ratio of 1: 1, PEA having the same amine value as the neutralization value thereof, and complete salt of both added was used. The dosage as PEA oleic acid salt is about 8.5 w/w%.

As is clear from Table 4, it was confirmed that sample 4 added with PEA oleic salt obtained the highest friction reducing effect.

### Example 5

### <Effect in Application to Grease>

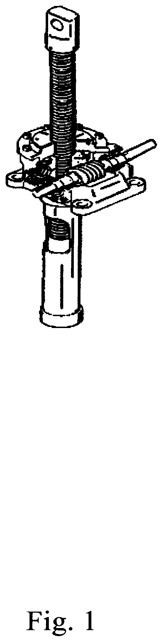

The friction characteristics of the grease were compared with the torque at the starting of operation by hanging the weight of the maximum load on the screw jack having the same structure as in FIG. 1.

**<TABLE 5> Friction Reducing Evaluation by Application to Grease**

| Sample No. | Sample Name | Friction Reduction Rate |
|---|---|---|
| 1 | Grease | 100% |
| 2 | Grease + PEA | 100% |
| 3 | Grease + Oleic Acid | 97% |
| 4 | Grease + PEA Oleic Acid Salt | 94% |

For grease, a commercially available product # 2 containing molybdenum was used. The fatty acids were evaluated by adding crude oleic acid 3%: 10% of C14 to C20 and 90% Of C14F1 to C18F2, PEA having an amine value equivalent to the neutralization value of crude oleic acid, and salts of both. PEA used was R₂ = 13, A = 4, m = 20, and X = n = 1.

The value of friction in the case of grease itself without additives is assumed to be 100%, and the evaluation is expressed numerically by comparison with it. The dosage as PEA oleic acid salt is 5.0 w/w%.

As is apparent from Table 5, it was confirmed that Sample 4 added with PEA oleic salt obtained the highest friction reducing effect.

### Example 6

**<TABLE 6> Change in Friction Characteristics by Grease**

| Sample No. | Sample Name | Normal CVJ | Worn CVJ |
|---|---|---|---|
| | | Chatter Noise | Chatter Noise |
| 1 | Grease A | ○ | Δ |
| 2 | Grease A + PEA | ○ | Δ |
| 3 | Grease A + Oleic Acid | ○ | Δ |
| 4 | Grease A + PEA Oleic Acid Salt | ⊚ | ○ |
| 5 | Grease B | × | × |
| 6 | Grease B + PEA | × | × |
| 7 | Grease B + Oleic Acid | Δ | × |
| 8 | Grease B+PEA Oleic Acid Salt | ○ | Δ |

| | | | |
|---|---|---|---|
| Legend: x = remarkable chatter can be confirmed Δ = chattering can be confirmed ○ = chattering can hardly be confirmed ⊚ = chattering can not be confirmed at all * Grease A: genuine CV joint grease * Grease B: General grease containing molybdenum disulfide * Fatty acid: Contains 80% oleic acid * PEA: PEA with R₂ = 13, A = 4, m = 20, X = n = 1 is used. * PEA fatty acid salt has a proportion that it becomes a complete salt as well as others. * In the test, using the Daihatsu Mira Turbo, the rear wheel axle was locked, and with the steering wheel turned off until the front wheel locked, the driving force was given at a stroke and the vibration occurring in the constant velocity joint (CVJ) was confirmed. | | | |

Evaluation was carried out using both a normal constant velocity joint (CVJ) and a worn joint (CVJ).
* The dosage of PEA oleic acid salt is 4.2 w/w%.

As is apparent from Table 6, the sample 4 added with PEA oleic acid salt confirmed the best result against chatter occurrence. Regarding the constant velocity joint (CVJ), it was confirmed that friction reduction can be achieved not only for normal one but also for worn ones, so it can be said that it is suitable for operation using Sample 4 at maintenance.

### Example 7

### Sludge Evaluation: Sludge Evaluation in Hydraulic Fluid

**<TABLE 7> Sludge Formation and Sludge Removal Performance in Hydraulic Fluid**

| Sample No. | Sample Name | Sludge Generation | Sludge Removal |
|---|---|---|---|
| 1 | Hydraulic Fluid A | ×× Generated a lot | × Cannot be Removed |
| 2 | Hydraulic Fluid A + PEA | Δ Partially Generated | Δ Partially removed |
| 3 | Hydraulic Fluid A + Oleic Acid | × Generated | × Cannot be Removed |
| 4 | Hydraulic Fluid A + PEA Oleic Acid Salt | ○ Almost No Generation | ⊚ Remove Perfectly |
| 5 | Hydraulic Fluid B | Δ A Little Generated | × Cannot be Removed |
| 6 | Hydraulic Fluid B + PEA | Δ A Little Generated | ○ Almost Removed |
| 7 | Hydraulic Fluid B + Oleic Acid | × Generated | × Cannot be Removed |
| 8 | Hydraulic Fluid B + PEA Oleic Acid Salt | ⊚ Generate Not At All | ⊚ Remove Perfectly |

| | | | |
|---|---|---|---|
| * Hydraulic fluid A: (VG 32) Common hydraulic fluid not containing dispersant * Hydraulic fluid B: (VG 32) containing dispersant. Dispersant is succinimide type * The fatty acid is a fatty acid containing 80% oleic acid * PEA is R₂ = 13, A = 4, m = 20, X is n = 1 * The dosage was 0.5 w/w% for the fatty acid, PEA of it was the same amine value as the neutralization value of the fatty acid, and PEA fatty acid salt of it was produced salts with these two amounts. * The dosage as PEA oleic acid salt is 4.2 w/w%. | | | |

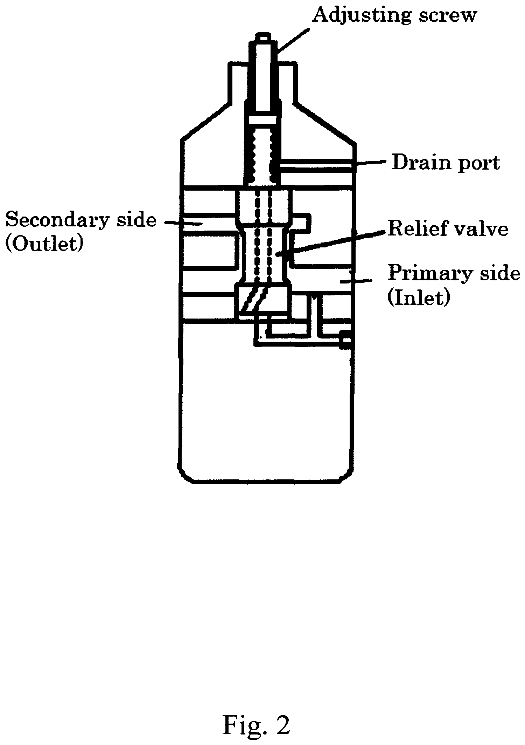

In the sludge formation test, the relief pressure valve as shown in Fig. 2 was set to a hydraulic pressure of 210 kg/cm 2, the relief valve was operated by a hydraulic pump, 5 liters of hydraulic oil was circulated, the oil temperature was raised to 70 °C and the operation was carried out for one week, The relief pressure valve in the relief valve was taken out and the surface was observed with a metallurgical microscope and evaluated.

Sludge removal was evaluated in the same way using 20 liters of hydraulic fluid which the oil temperature was kept at 50 °C. and using sludge formation under the same condition.

As is clear from Table 7, it was confirmed that in Samples 4 and 8 using PEA oleic acid salt, generation of sludge was suppressed and sludge removal was also possible.

### Example 8

### Evaluation of Deposit and Sludge in Engine Oil

**<TABLE 8> Engine Oil Deposit**

| Sample No. | Sample Nama | EGR Pipe | Circumference above Piston Ring | CCD | Sludge |
|---|---|---|---|---|---|
| 1 | Oil | × | × Deposit All Around | × | Δ |
| 2 | Oil + PEA | ○ | Δ Partial Deposit, a Little | Δ | Δ |
| 3 | Oil + Oleic Acid | × | × Deposit all Around | ×× | × |
| 4 | Oil + PEA Oleic Acid Salt | ⊚ | ○ Little Deposit | ○ | ○ |
| 5 | Oil + PEA Oleic Acid Salt + POEAA | ⊚ | ⊚ No Deposit | ⊚ | ⊚ |

| | | | | | |
|---|---|---|---|---|---|
| Evaluation of EGR piping: × = Dry deposit occurrence ○ = Somewhat soft deposit, ⊚ = Soft dirt that can be wiped off easily, not deposited. Evaluation of CCD: XX = Generation of slightly thick deposit on the entire upper surface of the piston, X = Deposit on the entire upper surface of the piston, Δ = Deposit at the center part of the piston, slightly occurring around the circumference, ○ = A slight deposit around the center part, ⊚ = No deposit occurred Evaluation of sludge: amount of varnish on the back side of the piston: × = brown varnish, Δ = yellow varnish, ○ = slight color can be seen, ⊚ = metallic color and no varnish. | | | | | |

The dirt in the EGR piping is a comprehensive evaluation of the running test by the actual vehicle using the following. Peugeot DW10 common rail diesel engine: engine oil = Total QUARTS INEO ECS 5W-30, and Mazda Demio 1.3 L direct injection: engine oil = Mazda genuine GOLDEN ECO 0W-20 SN.

Deposit at the upper circumference of the piston ring: CCD, sludge evaluation was evaluated after 100 hours of testing by disassembling of the engine using a Subaru generator: engine oil = Subaru genuine 5W-30 SJ and evaluated.

The fatty acid is a commercially available fatty acid containing 80% oleic acid.

PEA is R₂ = 13, A = 4, m = 20, X = n = 1.

The dosage is 0.5 w/w% of the fatty acid, PEA of it is the same amine value as the neutralization value of the fatty acid, and PEA fatty acid salt of it is a salt made by both amounts.

The dosage of PEA oleic acid salt is approximately 4.2 w/w% under the above conditions.

POEAA is a polyoxyethylene alkylamines, a + b = 2, and with a mixture of R₃ = C 8: 8%, C 10: 7%, 12: 48%, C 14: 18%, C 18: 9%. The dosage is 20.0 w/w% based on PEA oleic acid salt.

In addition, oil + POEAA alone cannot be evaluated because the engine oil gels.

As is apparent from the above Table 8, it was confirmed that the deposits and sludge formation (burnish amount) was suppressed in Samples 4 and 5 using PEA oleic acid salt.

### Example 9

### Engine Oil Stability Test

**<TABLE 9> Engine Oil Stability Test**

| **Sample No.** | **Sample Name** | **Storage Stability** | **Storage stability after 1000 km** |
|---|---|---|---|
| **1** | **Oil + PEA** | **Clear** | **Clear** |
| **2** | **Oil + Oleic Acid** | **Precipitation** | **Precipitation** |
| **3** | **Oil + PEA Oleic Acid Salt** | **Haze** | **Precipitation** |
| **4** | **Oil + PEA Oleic Acid Salt + POEAA** | **Clear** | **Clear** |
| **5** | **Oil + POEAA** | **Gelled** | **Gelled** |

Storage stability test was stored at 30∼40°C, and confirmed after 1 month.

The same results were obtained for each various gasoline genuine oil, API-SN grade oil: Mazda genuine GOLDEN ECO 0W-20, Honda genuine S9 10W-30, diesel oil: ACEAE C2 · A5/B5 Total QUARTS INEO ECS 5W-30.
In the evaluation, the same additives as in the above engine oil deposit test were added at the same dosage and evaluated.

As is apparent from Table 9, all of the engine oil contains overbased metal sulfonate / phenate and the like. As the result, precipitation occurs both engine oil with carboxylic acid alone as the matter of cause and polyetheramine carboxylic acid salt in Samples 2 and 3. However, it was confirmed that no precipitation occurred in Sample 4 in which POEAA was added to the polyetheramine carboxylic acid salt.

On the other hand, when POEAA alone is added to the engine oil, it is known that the engine seizure will occur in the worst case. However, when POEAA alone was added to the engine oil in the storage stability test conducted this time, this gelation phenomenon was confirmed. In this respect, it was confirmed that this gelation did not occur in POEEA in combination with polyether carboxylic acid salt as Sample 4.

As is apparent from the above Examples, in each of the samples in which the carboxylic acid was added to the polyetheramine, all the oil-based lubricants showed different performances from those containing the individual components, and the detergency, the lubricating performance, and the effect of suppressing sludge formation on the metal surface was produced. At the same time, it can be seen on the polyetheramine carboxylic acid salt combined with polyoxyalkylene alkyl amine that detergency and lubricating performance are improved.

As described above, the present invention can be implemented.

That is,
the present invention provides an additive for a lubricating oil formula comprising a polyetheramine carboxylic acid salt represented by the following general formula (1).

[R₁-COO⁻][R₂-O(AO)ₘ-XH⁺] (1)

R₁ is a hydrocarbon residue of a carbon number of 7-21.
The polyetheramine moiety having a base moiety is a compound represented by R₂ - O (AO) m-X.
In the formula (1), R₂ is a hydrocarbon residue of a carbon number of 8 to 50, A is an alkylene group of a carbon number of to 6, O is oxygen, m is an integer of 10 to 50, X is a hydrocarbon containing an amino group or a substituted amino group,
X is (C₃H₆NH) n H, and
n is an integer of 1 to 3.

It is used as additive for lubricant.

In addition, the present invention provides additives for lubricant comprising a polyoxyalkylene alkylamine represented by the following general formula (2) in the polyetheramine carboxylic acid salt represented by the above general formula (1).

R₃-N(BO)aH(BO)bH (2)

In the formula (2), R₃ represents an alkyl group or an alkenyl group of a carbon number of 6 to 24,
a and b each represents an average degree of polymerization, a and b each represents an integer of 1 or more, a + b represents an integer of 1 to 30, and
B is an alkylene group of a carbon number of 2 to 4.

Also, n can be 1 in X.

Also, R₃ can be an aliphatic hydrocarbon group of a carbon number of 10 to 18.

Also, a + b can be 2 to 4.

Also, the present invention provides a lubricant composition containing the above additive for a lubricant formula, which is used for all lubricants, such as
engine oil for internal combustion engine,
transmission oil,
gear oil,
grease, and
hydraulic oil.

## Claims

1. An additive for a lubricant comprising a polyetheramine carboxylic acid salt represented by the following general formula (1),
[R₁-COO⁻][R₂-O(AO)ₘ-XH⁺] (1)
wherein R₁ is a hydrocarbon residue of a carbon number of 7 to 21, the polyetheramine moiety having a base moiety is a compound represented by R₂ - O (AO) m - X,
in the formula (1), R₂ is a hydrocarbon residue of a carbon number of 8 to 50, A is an alkylene group of a carbon number of 2 to 6, O is oxygen, m is an integer of 10 to 50, and X is a hydrocarbon containing an amino group or a substituted amino group, where
X is (C₃H₆NH)nH, and
n is an integer of 1 to 3.

2. The additive for a lubricant according to claim 1, comprising a polyoxyalkylene alkylamine represented by the following general formula (2),
R₃-N(BO)aH(BO)bH (2)
wherein, in the formula (2), R₃ represents an alkyl group or an alkenyl group of a carbon number of 6 to 24,
a and b each represent a mean degree of polymerization, a and b each represent an integer of 1 or more, and a + b represents an integer of 1 to 30, and
B is an alkylene group of a carbon number of 2 to 4.

3. The additive for a lubricant according to claim 1 or 2, wherein n = 1 in X.

4. The additive for a lubricant according to claim 2 or 3, wherein R₃ is an aliphatic hydrocarbon group of a carbon number of 10 to 18.

5. The additive for a lubricant according to any one of claims 2 through 4, wherein a + b is 2 to 4.

6. A lubricant composition containing an additive according to any one of claims 1 through 5, which is used for all lubricants, such as
engine oil for internal combustion engines,
transmission oil,
gear oil,
grease, and
hydraulic oil.
